(19) Europäisches Patentamt
European Patent Office
Office européen des brevets

(11) **EP 1 925 494 A2**

(12) **EUROPEAN PATENT APPLICATION**

(43) Date of publication:
**28.05.2008 Bulletin 2008/22**

(51) Int Cl.:
***B60L 11/18*** *(2006.01)*     ***B60L 11/12*** *(2006.01)*

(21) Application number: **07254557.7**

(22) Date of filing: **22.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.11.2006 JP 2006317371**

(71) Applicant: **Hitachi, Ltd.**
**Chiyoda-ku**
**Tokyo 100-8280 (JP)**

(72) Inventors:
• **Tachihara, Shuichi**
**Chiyoda-ku, Toyko 100-8220 (JP)**

• **Kojima, Tetsuo**
**Chiyoda-ku, Toyko 100-8220 (JP)**
• **Shimada, Motomi**
**Chiyoda-ku, Toyko 100-8220 (JP)**
• **Nagasu, Masahiro**
**Chiyoda-ku, Toyko 100-8220 (JP)**
• **Toyota, Eiichi**
**Chiyoda-ku, Toyko 100-8220 (JP)**

(74) Representative: **Paget, Hugh Charles Edward et al**
**Mewburn Ellis LLP**
**York House**
**23 Kingsway**
**London WC2B 6HP (GB)**

(54) **Energy management for hybrid energy railway vehicle**

(57) A drive control device for railway vehicle with high energy efficiency having DC power generating means and an electrical storage device and using power generated by at least one of the both means, in which energy management of the electrical storage device is carried out according to ever-changing route condition with a simpler configuration is provided. From a difference between kinetic energy calculated from a running speed of a vehicle and a reference kinetic energy calculated from reference speed information to a train location of the vehicle, an excess or shortage of a storage amount caused by a gradient condition of the route is estimated. Based on the estimated excess or shortage of the storage amount, a charging/discharging amount of the electrical storage device is adjusted.

EP 1 925 494 A2

**Description**

BACKGROUND OF THE INVENTION

Field of the Invention

The present invention relates to a drive control device for railway vehicle provided with DC power generating means and electrical storage means and particularly to a technology for driving a railway vehicle using power generated by at least one of both means.

Description of the Related Art

Recently, in railway vehicles, energy saving by utilizing electrical storage technology has been active by pursued. For example, instead of conventional railway motor cars driven only by a diesel engine, a hybrid railway motor car driven by a motor with an inverter similarly to an electric train and supplying power by an engine power-generating and electrical storage device is under development.

Hybrid railway motor cars having electrified driving system and an electrical storage device can recover/reuse power generated by a regenerating brake, which was impossible in conventional railway motor cars, and can realize energy saving.

With regard to the hybrid railway motor cars, a railway vehicle using both of a power generator driven by an electrical storage device and an engine or a fuel cell is described in Japanese Patent Laid-Open Publication No. 2006-74998 (Patent Document 1).

In the hybrid railway motor car, there are problems that a discharge amount of an electrical storage device becomes larger during power running on an up-hill gradient, for example, and a dischargeable limit value is reached and predetermined acceleration performance can not be realized, and a chargeable limit value is reached during regeneration on a down-hill gradient and power generated by a regenerating brake can not be sufficiently absorbed but energy efficiency is lowered.

In order to solve the above problems, the railway vehicle described in Japanese Patent Laid-Open Publication No. 2006-74998 maintains route information such as the relation between a train location and a running speed of the vehicle (hereinafter referred to as a run curve), gradients and the like as a database, and the database to be referred to is switched according to the running route. A regenerated power to be obtained during running is estimated based on the referred database so as to manage a storage amount according to the route condition so that over-discharge/overcharge of the electrical storage device is prevented and a railway vehicle with high energy efficiency is realized.

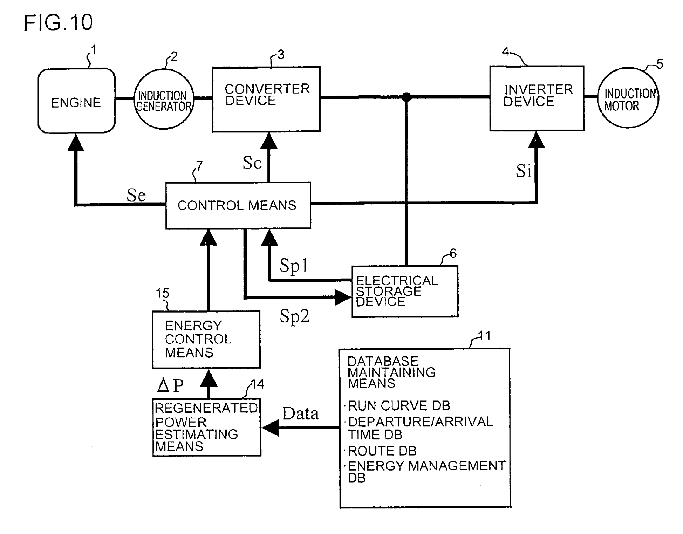

A basic configuration of a railway vehicle described in Japanese Patent Laid-Open Publication No. 2006-74998 is shown in FIG. 10. An induction generator 2 is driven by an engine 1 and outputs AC power. A converter device 3 converts the AC power outputted from the induction generator 2 to DC power. An inverter device 4 inverts the DC power outputted from the converter device 3 to the AC power. An induction motor 5 receives the AC power outputted from the inverter device 4 as an input, converts it to an axial torque and outputs it so as to accelerate/decelerate the vehicle. An electrical storage device 6 is connected to the DC power side of the converter device 3 and supplies/absorbs the DC power.

Database maintaining means 11 maintains route information such as run curves, gradients, curves and the like, departure and arrival time of each station, and storage capacity and storage characteristics of the electrical storage device 6 as a database. The database maintaining means 11 maintains plural patterns of databases of route information such as run curves, gradients, curves and so on, departure and arrival time of each station, and storage capacity and storage characteristics of the electrical storage device 6 according to the running route and outputs data Data of selected run curve and route information according to the running route.

A regenerated power estimating means 14 outputs an estimated value ΔP obtained at regenerating operation based on the data Data such as the run curve and route information outputted from the database maintaining means 11.

Energy control means 15 determines a ratio between a power generation amount of the induction generator 2 and power supplied from the electrical storage device 6 based on the estimated value ΔP of the regenerated power outputted from the regenerated power estimating means 14.

Control means 7 receives the ratio of the power generation amount of the induction generator 2 and the power supplied from the electrical storage device 6 outputted from the energy control means 15 and an internal state signal Sp1 of the electrical storage device 6 as an input and outputs a driving command Se to the engine 1, a driving command Sc to the converter device 3, and a driving command Si to the inverter device 4. Though not shown here, an operation command Sp2 is outputted to a charging/discharging control device arranged inside the electrical storage means 6.

In a railway vehicle described in Japanese Patent Laid-Open Publication No. 2006-74998, control of the electrical storage device 6 is carried out based only on the database maintained by the database maintaining means 11. Thus, for the control of the electrical storage device 6 according to the route condition, a lot of information including the route information such as run curves, gradients, curves and the like, departure and arrival time of the vehicle, storage capacity and storage characteristics of the electrical storage device 6 should be maintained as a database. Also, even if the database is maintained, a change in the route condition such as occurrence of slip and slide due to raining, which can not be made into a database, can not be responded.

The present invention has an object to carry out energy management of an electrical storage device according to ever-changing route condition with a simpler configuration in a drive control device for railway vehicle having a DC power generating device and an electrical storage device and using power generated at least one of both means.

SUMMARY OF THE INVENTION

In order to solve the above problems, the drive control device for railway vehicle of the present invention estimates an excess or shortage of a storage amount caused by a change in the route condition from a difference between kinetic energy of a railway vehicle calculated from a running speed of the vehicle and reference kinetic energy calculated from reference speed information with respect to a train location of the vehicle. Based on the estimated excess or shortage of the storage amount, the electrical storage device manages a charging/discharging amount so that overcharge or over-discharge does not occur in the electrical storage device.

According to the present invention, by using an actual running speed when the excess or shortage of the storage amount caused by a change in the route condition is to be estimated, the change in the route condition, which can not be made into a database, can be responded. Also, there is no need for a lot of databases as the railway vehicle described in Japanese Patent Laid-Open Publication No. 2006-74998. By this arrangement, the energy management of the electrical storage device according to the ever-changing route condition is enabled with a simpler configuration.

BRIEF DESCRIPTION OF THE DRAWINGS

FIG. 1 is a diagram illustrating a drive control device for railway vehicle of a first embodiment of the present invention;
FIG. 2 is a diagram illustrating a configuration example of speed calculating means and train location calculating means;
FIG. 3 is a diagram illustrating a configuration example of database maintaining means and power consumption estimating means;
FIG. 4 is a diagram illustrating the relation between a run curve on a down-hill gradient, running speed and a storage amount;
FIG. 5 is a diagram illustrating the relation between a run curve on an up-hill gradient, running speed and a storage amount;
FIG. 6 is a diagram illustrating a method of correcting a target value of a storage amount in the present invention;
FIG. 7 is a diagram illustrating a simulation result according to the present invention;
FIG. 8 is a diagram illustrating the drive control device for railway vehicle of a second embodiment of the present invention;
FIG. 9 is a diagram illustrating the drive control device for railway vehicle of a third embodiment of the present invention;
FIG. 10 is a diagram illustrating a basic configuration of a prior art; and
FIG. 11 is a diagram illustrating a simulation result according to the prior art.

DETAILED DESCRIPTION OF THE PREFERRED EMBODIMENTS

An embodiment of the present invention will be described below referring to the attached drawings.

[First Embodiment]

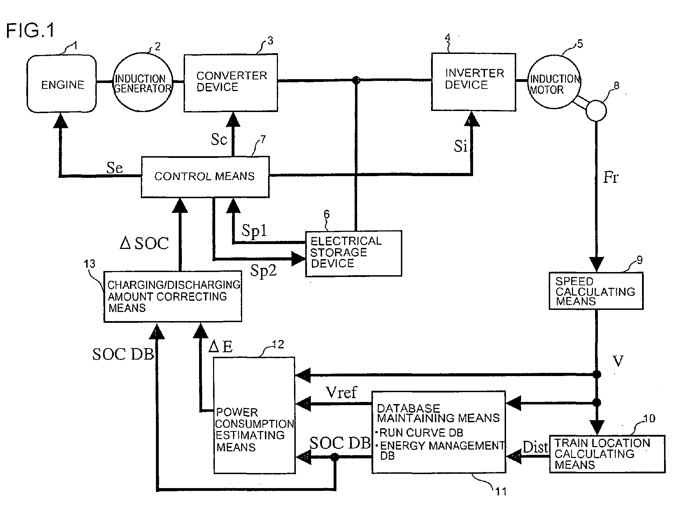

FIG. 1 shows a drive control device for railway vehicle of a first embodiment of the present invention.

The induction generator 2 is driven by the engine 1 and outputs AC power. The converter device 3 converts the AC power outputted from the induction generator 2 to DC power. The engine 1, the induction generator 2, and the converter device 3 constitute DC voltage generating means.

The inverter device 4 inverts the DC power outputted from the converter device 3 to the AC power. The induction motor 5 receives the AC power outputted from the inverter device 4 as an input, converts it to an axial torque and outputs it so as to accelerate/decelerate the railway vehicle.

The electrical storage device 6 is connected to the DC power side of the converter device 3 and supplies and absorbs the DC power.

The control means 7 receives the internal state signal Sp1 of the electrical storage device 6 and a correction amount ΔSOC of the charging/discharging amount of the electrical storage device 6 outputted from charging/discharging amount correcting means 13, which will be described later, as an input and outputs a driving command Se to the engine 1, the driving command Sc to the converter device 3, and the driving command Si to the inverter device 4.

The correction value ΔSOC of the charging/discharging amount is calculated by a speed sensor 8, speed calculating means 9, train location calculating means 10, database maintaining means 11, power consumption estimating means 12, and charging/discharging amount correcting means 13, which are means to realize the present invention and corrects a charging/discharging amount of the electrical storage device 6 by estimating an excess or a shortage of a storage amount by a change in the route condition for energy management according to the route condition.

The speed sensor 8, the speed calculating means 9, the train location calculating means 10, the database maintaining means 11, the power consumption estimating means 12, and the charging/discharging amount correcting means 13 will be described later. Though not shown, the control means 7 outputs an operation command Sp2 to a charging/discharging control device arranged inside the electrical storage means 6.

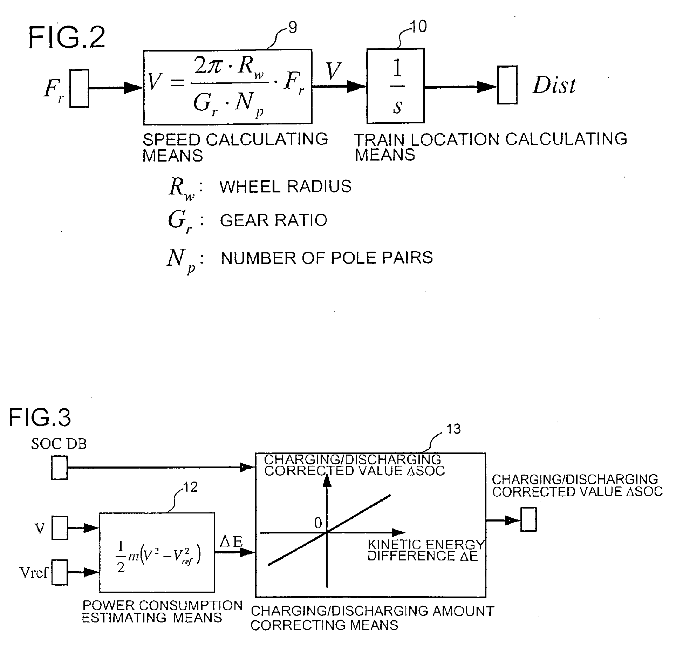

The speed calculating means 9 calculates a running speed V of a vehicle with rotating speed information Fr outputted from the speed sensor 8 detecting a rotating speed of the induction motor 5 as an input. The train location calculating means 10 calculates a train location Dist of the vehicle with the running speed V of the vehicle outputted from the speed calculating means 9 as an input. A configuration example of the speed calculating means 9 and the train location calculating means 10 is shown in FIG. 2. FIG. 2 shows an example of a calculating method of the running speed V and the train location Dist and does not limit the means. The running speed V is as shown in the following formula (1) using the rotating speed information Fr, a wheel radius Rw, a gear ratio Gr, and the number of pole pairs Np of the induction motor 5:

$$[\text{Formula 1}]$$

$$V = \frac{2\pi \cdot R_w}{G_r \cdot N_p} \cdot F_r \quad \ldots (1)$$

The train location calculating means 10 calculates the train location Dist by multiplying the running speed V per unit time.

The database maintaining means 11 maintains the reference speed information to the train location and storage patterns of the electrical storage device 6 to the running speed of the vehicle as the database. The reference speed information is set according to a railway diagram of the running route. It is only necessary to hold only one storage pattern and the pattern is set as the relation between the running speed when running on a flat section and a storage amount of the electrical storage device 6, for example.

The database maintaining means 11 refers to the reference speed information and the storage pattern with the running speed V and the train location Dist as an input and outputs a reference speed Vref to the train location Dist of the vehicle and a storage pattern SOCDB to the train speed V.

A configuration example of the power consumption estimating means 12 and the charging/discharging amount correcting means 13 is shown in FIG. 3. The power consumption estimating means 12 receives the running speed V and the reference speed Vref as an input and calculates a difference ΔE between kinetic energy of the vehicle calculated from the running speed V and reference kinetic energy of the vehicle calculated from the reference speed.

The charging/discharging amount correcting means 13 estimates power consumption of the inverter according to the route condition from the value of the difference ΔE of the kinetic energy outputted from the power consumption estimating means 12 and calculates the corrected value ΔSOC of the charging/discharging amount to the electrical storage device 6. Though not shown, in order to prevent overcharge and over-discharge of the electrical storage device 6, limitation is provided so that a sum of the storage pattern SOCDB to the vehicle speed V outputted from the database maintaining means 11 and the storage pattern corrected value ΔSOC does not exceed an upper limit value and a lower limit value set for the storage amount of the electrical storage device 6.

A method of calculating the corrected value ΔSOC of the charging/discharging amount when a gradient is changed as the route condition will be described below.

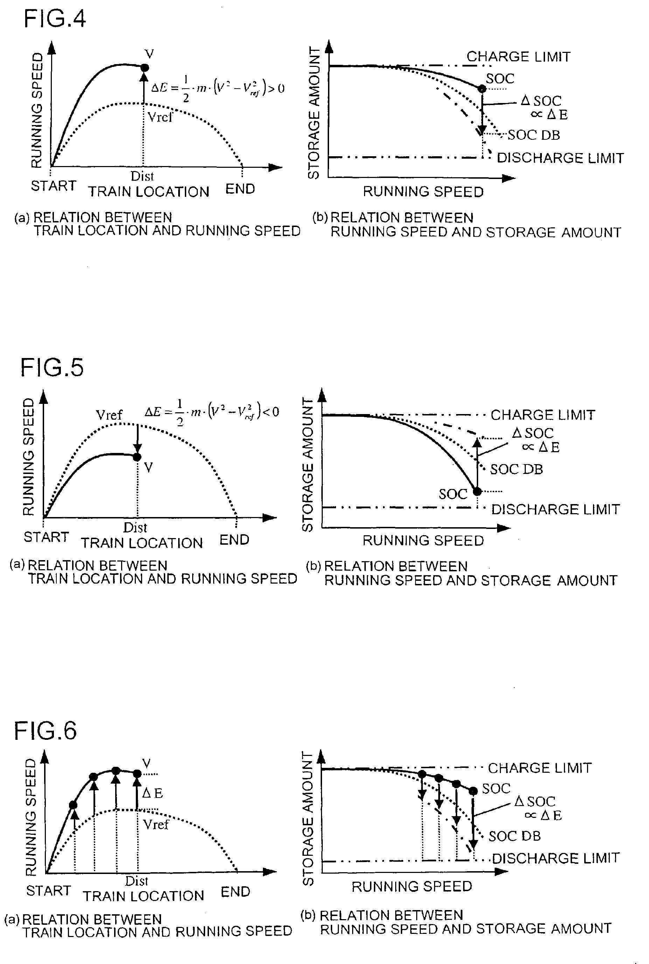

A run curve when a vehicle is running on a down-hill gradient and the relation between a running speed and a storage amount are shown in FIGS. 4A and 4B, respectively. In FIG. 4A, a solid line indicates an actual run curve, while a broken line indicates a target value determined from a railway diagram. In FIG. 4B, the solid line indicates actual values of the running speed and the storage amount, while the broken line indicates a target value illustrating the relation between the running speed and the storage amount when running in a flat section. A charge limit and a discharge limit shown by two-dot chain lines are an upper limit value and a lower limit value of the storage amount set in order to prevent failure of the electrical storage device due to overcharge/over-discharge.

When running on a down-hill gradient, acceleration is easier than running on a flat portion. Thus, a running speed when the same storage amount is consumed becomes faster than running on the flat portion (solid line in FIG. 4A). At this time, the relation between the running speed and the storage amount is the solid line in FIG. 4B, and an excess is caused in the storage amount as compared with the running on the flat portion.

Suppose an ideal condition with no energy is consumed for running resistance or lighting of a vehicle, the excess in the storage amount is a difference in kinetic energy of the vehicle. Considering that the power generation amount of the DC power generating means is restricted so that the storage amount of the electrical storage device is effectively utilized, when running on a down-hill gradient, acceleration is possible with a storage amount smaller than that when running on a flat portion. Thus, management with a storage amount smaller than the target value of the storage amount when running on the flat portion (broken line in FIG. 4B) and use of the power of the electrical storage device with priority are preferable.

As mentioned above, when the actual run curve (solid line in FIG. 4A) is higher than the target value of the run curve (broken line in FIG. 4A), it is determined as running in a down-hill gradient section, the target value of the storage amount is corrected from the broken line in FIG. 4B to a one-dot chain line in proportion to a difference between the kinetic energy acquired from the actual run curve and the target value of the kinetic energy acquired from the target value of the run curve, and the charging/discharging amount is managed so that the storage amount matches the target value after correction.

The target value of the storage amount is corrected based on the following formula. First, the difference $\Delta E$ of the kinetic energy is calculated. Suppose that the actual running speed is V, the reference speed obtained from the target value of the run curve is Vref, and the mass of the train is m, $\Delta E$ is obtained from the formula (2).

[Formula 2]

$$\Delta E = \frac{1}{2} \cdot m \cdot (V^2 - V_{ref}^2) \ \ldots \ (2)$$

The corrected value $\Delta SOC$ to the target value of the storage amount is obtained from the formula (3), supposing that the vehicle ideally reaches the maximum speed Vmax on design when a storage amount value SOCmax corresponding to the difference between the charge limit and the discharge limit has been consumed.

[Formula 3]

$$\Delta SOC = \frac{SOC_{max}}{\frac{1}{2} \cdot m \cdot V_{max}^2} \cdot \Delta E \qquad \ldots \ (3)$$

By this arrangement, the target value of the storage amount suitable for the down-hill gradient can be set, which enables efficient use of the storage amount.

Next, the run curve when a vehicle runs on an up-hill gradient and the relation between the running speed and the storage amount are shown in FIGS. 5A and 5B, respectively.

In FIG. 5A, the solid line indicates an actual run curve, while the broken line indicates a target value determined from a railway diagram. Also, in FIG. 5B, the solid line indicates the running speed and actual value of the storage amount, while the broken line shows a target value illustrating the relation between the running speed and the storage amount when running in a flat section. A charge limit and a discharge limit shown by two-dot chain lines are an upper limit value and a lower limit value of the storage amount set in order to prevent failure of the electrical storage means due to overcharge/over-discharge.

When running on an up-hill gradient, contrary to the down-hill gradient, acceleration is more difficult than running on a flat portion. Thus, a running speed when the same storage amount is consumed becomes slower than running on the flat portion (solid line in FIG. 5A). At this time, the relation between the running speed and the storage amount is the solid line in FIG. 5B, and a shortage is generated in the storage amount as compared with the running on the flat portion.

Suppose an ideal condition where no energy is consumed for running resistance or lighting of a vehicle, the excess in the storage amount is a difference in kinetic energy of the vehicle. In order to prevent over-discharge of the electrical storage device 6, in the case of running on the up-hill gradient, management with a storage amount larger than the storage amount in the case of running on a flat portion (broken line in FIG. 5B) is preferable.

As mentioned above, when the actual run curve (solid line in FIG. 5A) is lower than the target value of the run curve (broken line in FIG. 5A), it is determined as running in an up-hill gradient section, the target value of the storage amount is corrected from the broken line in FIG. 5B to a one-dot chain line in proportion to a difference between the kinetic energy acquired from the actual run curve and the target value of the kinetic energy acquired from the target value of the run curve, and the charging/discharging amount is managed so that the storage amount matches the target value after correction. The corrected value to the target value of the storage amount is obtained from the formulas (2), (3) similarly to the down-hill gradient.

Since the gradient condition of the route is constantly changing, the target value of the storage amount is corrected by determining a gradient condition of a running section from a difference between the kinetic energy acquired from the actual run curve and the target value of the kinetic energy acquired from the target value of the run curve for a given time as shown in FIG. 6. The storage amount is managed so that the value matches the target value after correction.

By this arrangement, without requiring many databases as in the prior art, the storage amount of the electrical storage device can be managed according to the ever-changing route condition with a simpler configuration.

A simulation was conducted in order to verify the effect of the present invention. The route condition is a case where a run curve of a flat section is given with respect to the actual running section with a down-hill gradient of -35%. The regenerating efficiency set at 40%, no running resistance and no power consumption such as lighting are supposed, and both power generated from the DC power generating means and power supplied from the electrical storage device are used during running.

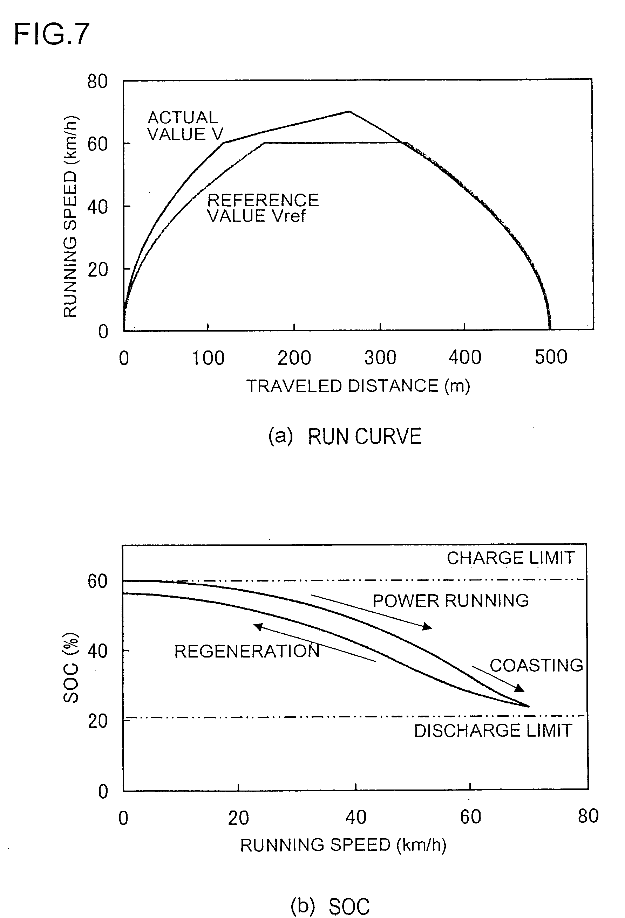

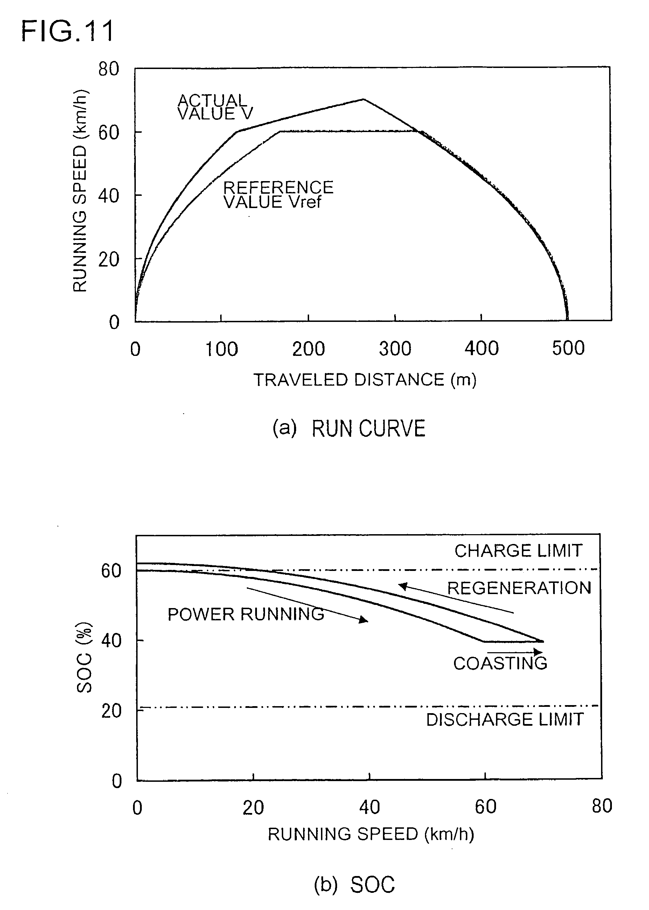

Simulation results are shown in FIGS. 7 and 11. FIG. 7 shows a case where the charging/discharging amount of the electrical storage device according to the present invention is corrected, and FIG. 11 shows a case where the correction of the charging/discharging amount of the electrical storage device according to the present invention is not carried out. In FIGS. 7 and 11, FIGS. A shows a run curve and a reference value is a target value of the run curve when running on a flat section. An actual value is a run curve when a vehicle is actually running. FIG. B shows the relation between the vehicle speed and a storage amount SOC. The charge limit and the discharge limit shown by two-dot chain lines are limit values set so that the electrical storage device will not charge or discharge any more to prevent a failure.

If the charging/discharging amount correction of the electrical storage device is not carried out according to the present invention, acceleration is easy during power running and stop is difficult in regeneration. Thus, the relation between the vehicle speed and the storage amount SOC becomes as shown in FIG. 11C, and when the regeneration operation is carried out and the vehicle is stopped, SOC is changed to approximately 61% and exceeds the charg limit (60%). The portion exceeding the charg limit is not charged in the electrical storage device, and the energy efficiency is lowered.

On the other hand, as shown in FIG. 7, when the charging/discharging amount correction of the electrical storage device according to the present invention is carried out, by correcting the charging/discharging amount of the storage amount based on the difference in the kinetic energy calculated from the run curve reference value and the actual value, the storage amount is converged between the charg limit and the discharg limit even after the vehicle is stopped.

In the railway vehicle described in Japanese Patent Laid-Open Publication No. 2006-74998, the gradient information is maintained as a database, but the gradient is constantly changing according to the train location. Therefore, for the energy management of the electrical storage device according to the change in the gradient, it is necessary to maintain the gradient information by dividing the route in a plurality of sections, and capacity of the database is also increased according to the number of divisions. If the database capacity is reduced by using an average gradient of the route, the energy management according to the ever-changing gradient condition becomes impossible. On the other hand, according to the present invention, since the gradient information can be estimated from the kinetic energy of the vehicle as mentioned above, the storage amount can be managed according to the gradient change without requiring the gradient database.

[Second Embodiment]

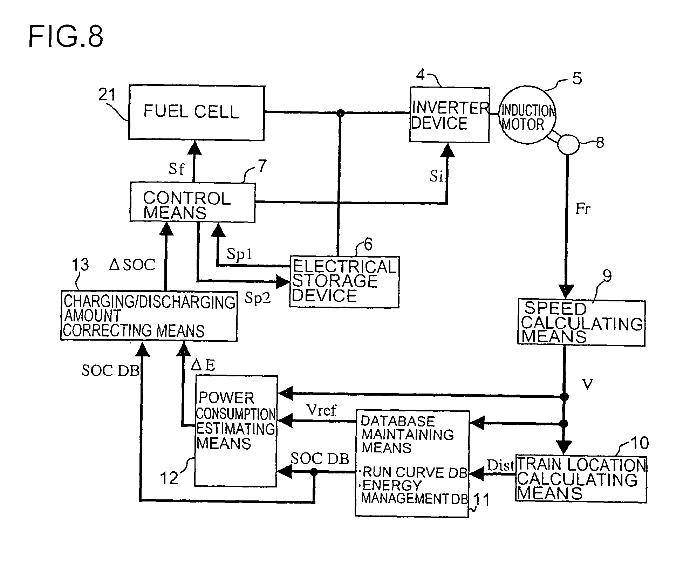

FIG. 8 shows a drive control device for railway vehicle of a second embodiment of the present invention. The first embodiment has a configuration of generating DC power by the engine 1, the induction generator 2, and the converter device 3, but in the second embodiment, a fuel cell 21 generating the DC power by chemical reaction of oxygen and hydrogen and the like is used.

In FIG. 8, the fuel cell 21 outputs the DC power as the DC power generating means. The inverter device 4 inverts the DC power outputted from the fuel cell 21 to AC power. The induction motor 5 receives the AC power outputted from the inverter device 4 as an input, converts it to an axial torque and outputs it so as to accelerate/decelerate the vehicle.

The electrical storage device 6 is connected to the fuel cell 21 and supplies and absorbs the DC power.

The control means 7 receives the internal state signal Sp1 of the electrical storage device 6 and the corrected amount ∆SOC of the charging/discharging amount of the electrical storage device 6 outputted from the charging /discharging amount correcting means 13, which will be described later, as an input and outputs a driving command Sf to the fuel cell 21 and the driving command Si to the inverter device 4.

The corrected value ∆SOC of the charging/discharging amount is calculated by the speed sensor 8, the speed calculating means 9, the train location calculating means 10, the database maintaining means 11, the power consumption estimating means 12, and the charging/discharging amount correcting means 13, which are means to realize the present invention and corrects a charging/discharging amount of the electrical storage device 6 by estimating an excess or a shortage of a storage amount depending on a change in the route condition for the energy management according to the route condition.

The speed sensor 8, the speed calculating means 9, the train location calculating means 10, the database maintaining means 11, the power consumption estimating means 12, and the charging/discharging amount correcting means 13 will be described later. Though not shown, the control means 7 outputs the operation command Sp2 to a charging/discharging control device arranged inside the electrical storage means 6.

The speed calculating means 9 calculates the running speed V of a vehicle with rotating speed information Fr outputted from the speed sensor 8 detecting a rotating speed of the induction motor 5 as an input. The train location calculating means 10 calculates the train location Dist of the vehicle with the running speed V of the vehicle outputted from the speed calculating means 9 as an input.

[Third Embodiment]

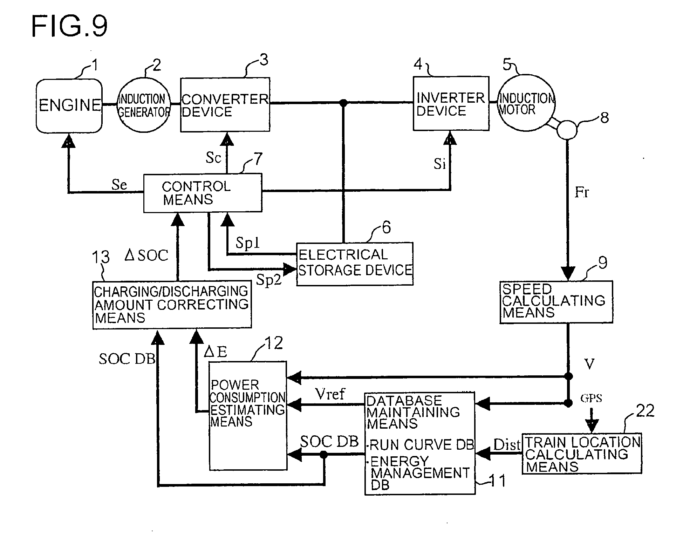

FIG. 9 shows a drive control device for railway vehicle of a third embodiment of the present invention. The first embodiment has a configuration of calculating the running speed V and the train location Dist from the rotating speed information Fr of the induction motor 5, but this embodiment is configured such that the train location Dist between the running speed V and the train location Dist is obtained from GPS (global positioning system).

In FIG. 9, the speed calculating means 9 calculates the running speed v of the vehicle with the rotating speed information Fr outputted from the speed sensor 8 detecting the rotating speed of the induction motor 5 as an input. On the other hand, train location calculating means 22 detects the current train location using GPS technology, which can know the current location using a signal from an artificial satellite cycling around the earth. The running speed V of the vehicle can be also detected from a change in the train location detected by the train location calculating means 22 using the GPS.

The database maintaining means 11 maintains the reference speed information to the train location and storage patterns of the electrical storage device 6 to the running speed of the vehicle as a database. The reference speed information is set according to the railway diagram of the service route. It is only necessary to hold only one storage pattern and the pattern is set as the relation between the running speed when running on a flat section and a storage amount of the electrical storage device 6, for example.

The database maintaining means 11 refers to the reference speed information and the storage pattern with the running speed V calculated by the speed calculating means 9 and the train location Dist detected using the GPS as an input and outputs a reference speed Vref to the train location Dist of the vehicle and a storage pattern SOCDB to the train speed V.

Subsequently, similarly to the first embodiment, the power consumption estimating means 12 calculates the difference ∆E between the kinetic energy of the vehicle calculated from the running speed V and the reference kinetic energy of the vehicle calculated from the reference speed.

And the charging/discharging amount correcting means 13 calculates the corrected value ∆SOC of the charging/discharging amount to the electrical storage device 6 by estimating the power consumption of the inverter according to the route condition from the value of the difference ∆E of the kinetic energy outputted from the power consumption estimating means 12.

As in the present invention, by estimating an excess or shortage of the storage amount caused by a change in the route condition from a difference between the kinetic energy of the vehicle calculated from the running speed of the vehicle and the reference kinetic energy calculated from the reference speed information to the train location of the vehicle so as to carry out energy management based on the estimation result, the drive control device for railway vehicle with high energy efficiency, which can also respond to the unexpected change in the route condition, can be provided.

From the viewpoint of environmental problems, improvement of energy efficiency is an important issue not only in the railway vehicle. The present invention that enables highly efficient energy management according to the gradient condition of the route, not requiring many databases as in the related art is an industrially effective technology.

**Claims**

1. A drive control device for railway vehicle having DC power generating means, an inverter device that inverts the DC power generated by the DC power generating means to AC power, an AC motor driven by the inverter device, and an electrical storage device connected to the DC power side of the inverter device and having a function to supply and absorb the DC power, **characterized by** comprising:

   means that obtains a running speed of a vehicle, means that obtains a train location of the vehicle, means having reference speed information to the train location and information of a reference storage amount of the electrical storage device to the running speed of the vehicle, and control means that operates the DC power generating means, the inverter device, and the electrical storage device based on the running speed, the train location, the reference speed information, and the reference storage amount information.

2. The drive control device for railway vehicle according to claim 1, **characterized in that** the control means estimates power consumption of the inverter device based on the running speed, the train location, and the reference speed information and operates a charging/discharging amount to the electrical storage device.

3. The drive control device for railway vehicle according to claim 1 or 2, **characterized in that** the DC power generating means has an AC generator driven by an engine and a converter device that converts AC power generated by the AC generator to DC power.

4. The drive control device for railway vehicle according to claim 1 or 2, **characterized in that** the DC power generating means has a fuel cell that generates the DC power by chemical reaction of oxygen and hydrogen and the like.

5. The drive control device for railway vehicle according to any one of claims 1 to 4, **characterized in that** the control means obtains at least one or more of the running speed and the train location by multiplying rotating speed information of the AC motor.

6. The drive control device for railway vehicle according to any one of claims 1 to 4, **characterized in that** the control means obtains at least one or more of the running speed and the train location from outside the drive control device for railway vehicle.

FIG.1

# FIG.2

$F_r \ \square$ → $V = \dfrac{2\pi \cdot R_w}{G_r \cdot N_p} \cdot F_r$ $\overset{V}{\longrightarrow}$ $\dfrac{1}{s}$ → $\square$ $Dist$

| 9 | 10 |

SPEED CALCULATING
MEANS

TRAIN LOCATION CALCULATING
MEANS

$R_w$: WHEEL RADIUS

$G_r$: GEAR RATIO

$N_p$: NUMBER OF POLE PAIRS

# FIG.3

SOC DB
$\square$

$V \ \square$ →

Vref $\square$ →

$\dfrac{1}{2} m(V^2 - V_{ref}^2)$

$\overset{\Delta E}{\longrightarrow}$

CHARGING/DISCHARGING
CORRECTED VALUE ΔSOC

KINETIC ENERGY
DIFFERENCE ΔE

→ $\square$

CHARGING/DISCHARGING
CORRECTED VALUE ΔSOC

POWER CONSUMPTION
ESTIMATING MEANS

CHARGING/DISCHARGING AMOUNT
CORRECTING MEANS

12

13

FIG.4

$$\Delta E = \frac{1}{2} \cdot m \cdot \left(V^2 - V_{ref}^2\right) > 0$$

(a) RELATION BETWEEN
TRAIN LOCATION AND RUNNING SPEED

(b) RELATION BETWEEN
RUNNING SPEED AND STORAGE AMOUNT

FIG.5

$$\Delta E = \frac{1}{2} \cdot m \cdot \left(V^2 - V_{ref}^2\right) < 0$$

(a) RELATION BETWEEN
TRAIN LOCATION AND RUNNING SPEED

(b) RELATION BETWEEN
RUNNING SPEED AND STORAGE AMOUNT

FIG.6

(a) RELATION BETWEEN
TRAIN LOCATION AND RUNNING SPEED

(b) RELATION BETWEEN
RUNNING SPEED AND STORAGE AMOUNT

# FIG.7

(a) RUN CURVE

(b) SOC

# FIG.8

# FIG.9

FIG.10

# FIG.11

(a) RUN CURVE

(b) SOC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006074998 A